(19) **Europäisches Patentamt**
**European Patent Office**
**Office européen des brevets**

(11) **EP 4 633 184 A1**

(12) **EUROPEAN PATENT APPLICATION**
published in accordance with Art. 153(4) EPC

(43) Date of publication:
**15.10.2025 Bulletin 2025/42**

(51) International Patent Classification (IPC):
**H04N 23/73** (2023.01)

(21) Application number: **23899226.7**

(52) Cooperative Patent Classification (CPC):
**H04N 23/67; H04N 23/73; H04N 23/743**

(22) Date of filing: **23.02.2023**

(86) International application number:
**PCT/CN2023/077878**

(87) International publication number:
**WO 2024/119626 (13.06.2024 Gazette 2024/24)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.12.2022 CN 202211572566**

(71) Applicant: **Himaging Technology (Shanghai) Co.,
Ltd.
Shanghai 200233 (CN)**

(72) Inventors:
• **CHEN, Xingwang
Shanghai 200233 (CN)**
• **SHEN, Hui
Shanghai 200233 (CN)**
• **WANG, Xiang
Shanghai 200233 (CN)**

(74) Representative: **JD&P Patent Attorneys
Joanna Dargiewicz & Partners
ul. Mysliborska 93A/50
03-185 Warszawa (PL)**

(54) **EXPOSURE CONTROL METHOD AND APPARATUS FOR GLOBAL ROLLING SHUTTER, AND ELECTRONIC DEVICE**

(57) The present disclosure provides an exposure control method and apparatus for a globalized rolling shutter, and an electronic device, and relates to the technical field of automatic control and video imaging. A sensor module includes an optical imaging assembly and an image sensor. A control module sets exposure time of the sensor module to a maximum. Within a time interval between a start of exposure in an $n^{th}$-to-last (n>0) row and an end of exposure in a first row, the optical imaging assembly generates a light ray or controls a light ray to enter the image sensor to generate a scene image. A processor receives the scene image and analyzes a brightness distribution of the scene image, and transmits an analysis result to a light source controller. The light source controller determines new light source on-state duration or external light entry duration of the optical imaging assembly based on the analysis result, so as to complete automatic exposure. The present disclosure uses a rolling shutter sensor to achieve a function of globalized exposure and reduce a hardware cost. **In** addition, the exposure control method achieves better real-time performance of dynamic adjustment, making it easier to meet a requirement of a special imaging scene.

FIG. 1

## Description

## TECHNICAL FIELD

The present disclosure relates to the technical field of automatic control and video imaging, and in particular, to an exposure control method and apparatus for a globalized rolling shutter, and an electronic device.

## BACKGROUND

A rolling shutter effectively improves a frame acquisition rate of a sensor. However, the sensor cannot perform exposure on external light, which limits imaging performance of the sensor in a dynamic scene. In particular, smearing and jello effects produced by a rolling shutter sensor during imaging in the dynamic scene severely restrict application of the rolling shutter sensor in professional imaging fields. Therefore, integrating advantages of the rolling shutter and a globalized shutter has become an urgent problem to be solved in the imaging field.

Automatic exposure is a technique that adjusts light sensing time of the sensor based on an image brightness value to prevent an acquired image from being overexposed or underexposed. A traditional automatic exposure technology transmits a command to the sensor through a communication interface such as an inter-integrated circuit (IIC) to adjust exposure time and achieve a corresponding function. However, due to a delay in transmitting the command and making the command take effect, the traditional automatic exposure technology is difficult to achieve an automatic exposure function in real time. This restricts application of an image sensor in dynamic imaging.

Therefore, an exposure control method and apparatus for a globalized rolling shutter, and an electronic device are provided.

## SUMMARY OF PRESENT INVENTION

The present disclosure provides an exposure control method and apparatus for a globalized rolling shutter, and an electronic device, thereby achieving a function of globalized exposure and reducing a hardware cost. In addition, the exposure control method achieves better real-time performance of dynamic adjustment, making it easier to meet a requirement of a special imaging scene.

The present disclosure provides an exposure control method for a globalized rolling shutter, where a globalized rolling shutter system includes a sensor module and a control module connected to each other, the sensor module includes an optical imaging assembly and an image sensor, and the control module includes a processor and a light source controller; the exposure control method comprises:

the control module setting the exposure time of the sensor module to the maximum, and within a time interval between a start of exposure in an $n^{th}$-to-last (n>0) row and an end of exposure in a first row, the optical imaging assembly generating a light ray or controlling a light ray to enter the image sensor to generate a scene image;
the processor receiving the scene image and analyzing a brightness distribution (also referred to as metering) of the scene image, and transmitting an analysis result to the light source controller; and
the light source controller determines a new on-state duration or external light entry time of the optical imaging assembly based on the analysis result, so as to complete automatic exposure.

Optionally, the exposure control method further includes:

performing analysis and determining whether a weighted parameter of a grayscale distribution of the acquired scene image exceeds an upper benchmark limit in a specific metering mode; and
when the weighted parameter exceeds the upper benchmark limit, shortening, by the optical imaging assembly, duration of the generated light ray or the controlled light ray entering the image sensor, where specifically, the optical imaging assembly shortens the duration of the generated light ray or the controlled light ray entering the image sensor within the time interval between the start of the exposure in the $n^{th}$-to-last (n>0) row and the end of the exposure in the first row, so as to facilitate acquisition of the scene image by the image sensor.

Optionally, the exposure control method further includes:

performing analysis and determining whether a weighted parameter of a grayscale distribution of the acquired scene image is lower than a lower benchmark limit in a specific metering mode; and
when the weighted parameter is lower than the lower benchmark limit, increasing, by the optical imaging assembly, duration of the generated light ray or the controlled light ray entering the image sensor, where specifically, the optical imaging assembly increases the duration of the generated light ray or the controlled light ray entering the image sensor within the time interval between the start of the exposure in the $n^{th}$-to-last (n>0) row and the end of the exposure in the first row, so as to facilitate acquisition of the scene image by the image sensor.

Optionally, the exposure control method further includes:
for an illumination starting from the $n^{th}$-to-last (n>0) row, performing compensation on a pixel row after the $n^{th}$-to-last (n>0) row, specifically:

$$GV_R = \frac{E_{xcr}}{E_{xlr}} GV$$

where GV represents a grayscale value of a to-be-compensated pixel row, $GV_R$ represents a compensated grayscale value, $E_{xlr}$ represents time illumination duration of the to-be-compensated pixel row, and $E_{xcr}$ represents exposure time of a reference row of an external illumination controller.

Optionally, the optical imaging assembly includes a liquid crystal shutter, and an installation position of the liquid crystal shutter includes a liquid crystal panel on a surface of the image sensor and a light shielding panel on a surface of a lens of the image sensor.

The present disclosure provides an exposure control apparatus for a globalized rolling shutter, comprising a globalized rolling shutter system, where a globalized rolling shutter system includes a sensor module and a control module connected to each other, the sensor module includes an optical imaging assembly and an image sensor, and the control module includes a processor and a light source controller; the exposure apparatus further comprises:

an imaging module configured to set exposure time of the sensor module to a maximum through the control of the control module, wherein within a time interval between a start of exposure in an $n^{th}$-to-last (n>0) row and an end of exposure in a first row, the optical imaging assembly generates or controls the light ray to enter the image sensor, so as to facilitate acquisition of a scene image by the image sensor;

an analysis module configured to receive the scene image and analyze a brightness distribution (also referred to as metering) of the scene image through the processor, and transmit an analysis result to the light source controller; and

an exposure module configured to determine new light source on-state duration or external light entry time of the optical imaging assembly through the light source controller based on the analysis result, so as to complete automatic exposure.

Optionally, the exposure control apparatus further includes:

a first analysis and determining module configured to perform analysis and determine whether a weighted parameter of a grayscale distribution of the acquired scene image exceeds an upper benchmark limit in a specific metering mode; and

a first adjustment module configured to shorten, through the optical imaging assembly, duration of the light ray entering the image sensor when the weighted parameter exceeds the upper benchmark limit, , where specifically, the optical imaging assembly shortens the duration of the generated light ray or the controlled light ray entering the image sensor within the time interval between the start of the exposure in the $n^{th}$-to-last (n>0) row and the end of the exposure in the first row, so as to facilitate the acquisition of the scene image by the image sensor.

Optionally, the exposure control apparatus further includes:

a second analysis and determining module configured to perform analysis and determine whether a weighted parameter of a grayscale distribution of the acquired scene image is lower than a lower benchmark limit in a specific metering mode; and

a second adjustment module configured to increase, through the optical imaging assembly, duration of the light ray entering the image sensor when the weighted parameter is lower than the lower benchmark limit, , where specifically, the optical imaging assembly increases the duration of the generated light ray or the controlled light ray entering the image sensor within the time interval between the start of the exposure in the $n^{th}$-to-last (n>0) row and the end of the exposure in the first row, so as to facilitate the acquisition of the scene image by the image sensor.

Optionally, for an illumination starting from the $n^{th}$-to-last (n>0) row, compensation needs to be performed on a pixel row after the $n^{th}$-to-last (n>0) row, specifically:

$$GV_R = \frac{E_{xcr}}{E_{xlr}} GV$$

where GV represents a grayscale value of a to-be-compensated pixel row, $GV_R$ represents a compensated grayscale value, $E_{xlr}$ represents illumination duration of the to-be-compensated pixel row, and $E_{xcr}$ represents exposure time of a reference row of an external illumination controller.

Optionally, the optical imaging assembly includes a liquid crystal shutter, and an installation position of the liquid crystal shutter includes a liquid crystal panel on a surface of the image sensor and a light shielding panel on a surface of a lens of the image sensor.

The present disclosure further provides an electronic device, including:

a processor; and a memory configured to store an instruction executable by the processor, where the instruction is executed by the processor to perform the exposure control method described above; and a programmable logic device; and a memory configured to store a loaded file of the programmable logic device, where the loaded file is loaded into the programmable logic device to perform the exposure control method described above.

The present disclosure further provides a computer-readable storage medium, where the computer-readable storage medium stores at least one program, and the at least one program is executed by a processor to implement the exposure control method described above.

In order to address problems that a pixel unit of a globalized shutter sensor has long light sensing time and a low frame rate, and an image sensor has smearing and jello effects, the present disclosure provides a method that combines light sensing of the pixel unit and a sensor timing sequence to adjust automatic exposure. In this way, the image sensor and the pixel unit can be simultaneously exposed to achieve a same function as a globalized shutter. On a basis of reducing occurrence of the smearing and jello effects in imaging of a motion scene, a frame acquisition rate is ensured, dynamic imaging quality is improved, and a hardware cost is reduced. In addition, in methods for achieving the automatic exposure, controlling a sensitivity ratio of the image sensor is more real-time than setting a parameter of an image chip. The controlling the sensitivity ratio of the image sensor can effectively meet requirements of imaging in special dynamic scenes such as medical treatment, biological research, high-speed motion photography, and autonomous driving.

**BRIEF DESCRIPTION OF THE DRAWINGS**

To describe the technical solutions in the embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.

FIG. 1 is a schematic diagram showing an automatic exposure system of a globalized rolling shutter in a dark field;
FIG. 2 is a schematic diagram showing an automatic exposure system of a globalized rolling shutter in a bright field;
FIG. 3 is a schematic structural diagram showing a liquid crystal shutter;
FIG. 4 shows a control timing sequence of automatic exposure of a globalized rolling shutter;
FIG. 5 shows a control timing sequence of overexposure in automatic exposure of a globalized rolling shutter;
FIG. 6 shows a control timing sequence of underexposure in automatic exposure of a globalized rolling shutter;

FIG. 7 is a schematic structural diagram showing an exposure control apparatus for a globalized rolling shutter according to an embodiment of the present disclosure;
FIG. 8 is a schematic structural diagram showing an electronic device according to an embodiment of the present disclosure; and
FIG. 9 is a schematic diagram showing a computer-readable storage medium according to an embodiment of the present disclosure.

**DETAILED DESCRIPTION OF THE EMBODIMENTS**

The following illustrates in detail the present disclosure, such that those skilled in the art can realize the present disclosure. The following preferred embodiments are merely used as an example for description, and other apparent variations are likewise conceivable to those skilled in the art. The basic principles of the present disclosure defined in the following description may be applied to other embodiments, variations, improvements, equivalents, and other technical solutions that do not depart from scope of the present disclosure.

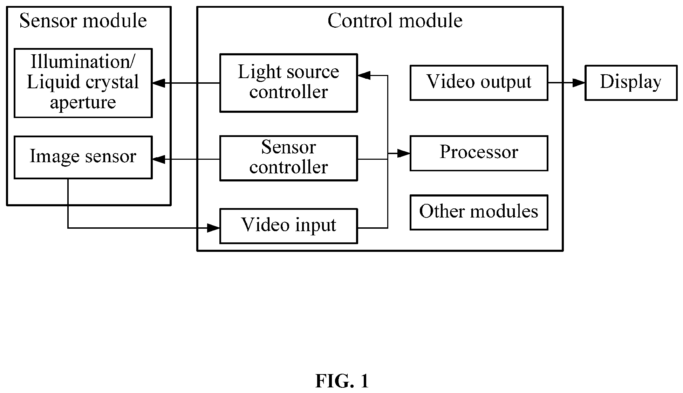

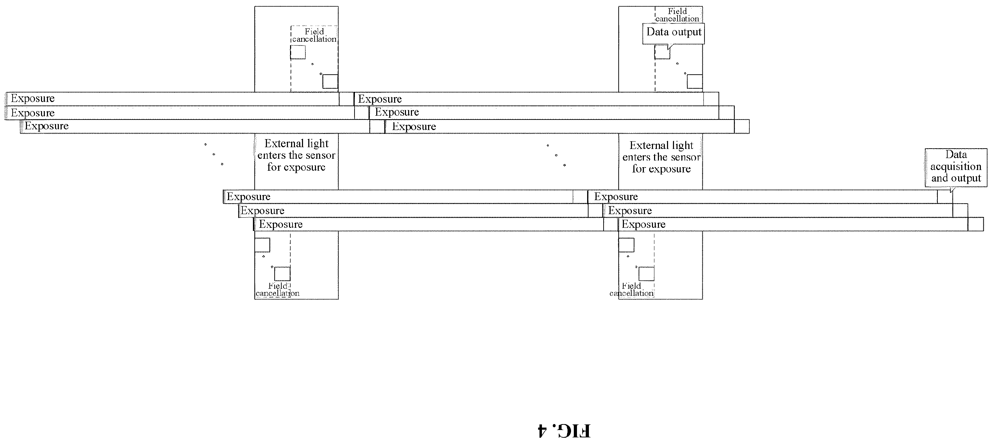

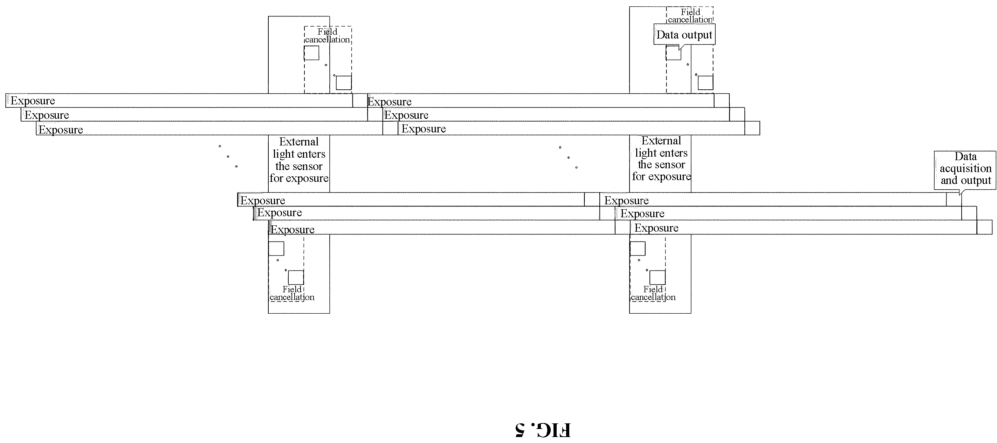

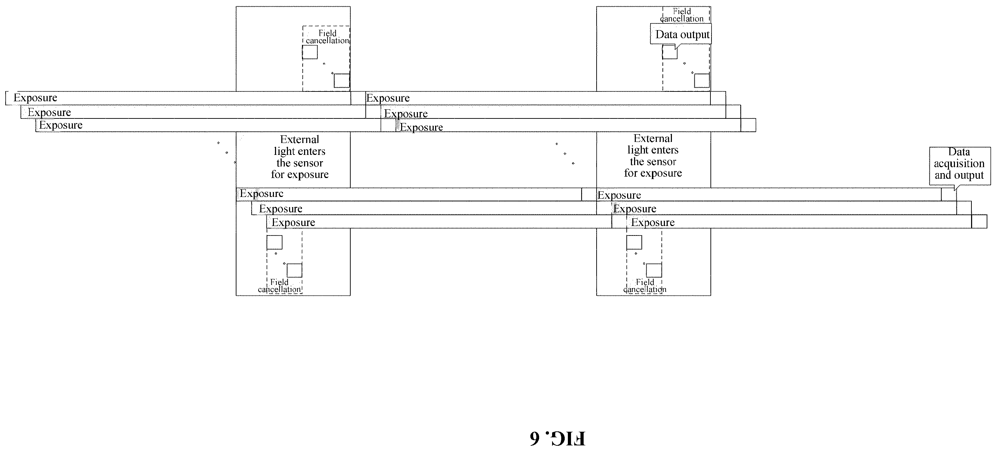

The following describes exemplary embodiments of the present disclosure more comprehensively with reference to FIG. 1 to FIG. 9. However, the exemplary embodiments may be implemented in various forms, and may not be construed as being limited to those embodiments described in the present disclosure. On the contrary, the exemplary embodiments are provided such that the present disclosure will be more thorough and complete and it is more convenient to comprehensively convey the inventive concept to those skilled in the art. Same reference numerals in the figures indicate same or similar elements, assemblies, or parts, and thus are not repeatedly described.

On a premise of complying with the technical concept of the present disclosure, features, structures, characteristics, or other details described in a specific embodiment may not be excluded from being combined in at least one other embodiment in an appropriate manner.

In description of specific embodiments, the features, structures, characteristics, or other details described in the present disclosure are intended to enable those skilled in the art to fully understand the embodiments. However, it is not excluded that those skilled in the art may practice the technical solutions of the present disclosure without at least one of the specific features, structures, characteristics, or other details.

The flowcharts shown in the accompanying drawings are only exemplary, and it is not mandatory to include all content and operations/steps, or perform the operations/steps in the order described. For example, some operations/steps can also be decomposed, while some operations/steps can be merged or partially merged. Therefore, an actual execution order may change based on an actual situation.

The block diagrams shown in the accompanying drawings are merely functional entities, which do not necessarily correspond to physically independent entities. These functional entities may be implemented in a form of software, or implemented in at least one hardware module or integrated circuit, or implemented in different networks and/or processor apparatuses and/or microcontroller apparatuses.

The term "and/or" means that at least one of associated listed items or all possible combinations are included.

FIG. 1 is a schematic diagram showing an automatic exposure system of a globalized rolling shutter in a dark field. The automatic exposure system may include: a globalized rolling shutter system including a sensor module and a control module connected to each other, the sensor module includes an optical imaging assembly and an image sensor, and the control module includes a processor and a light source controller.

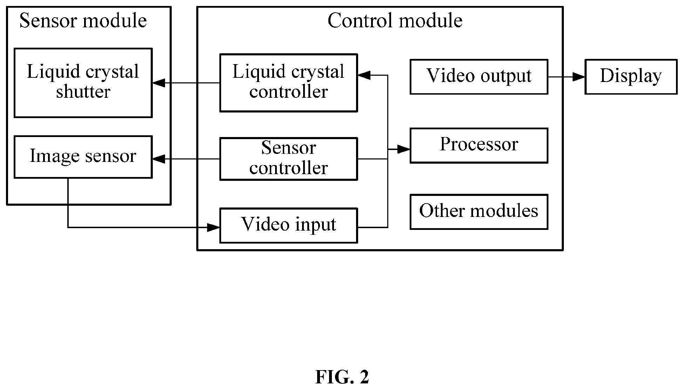

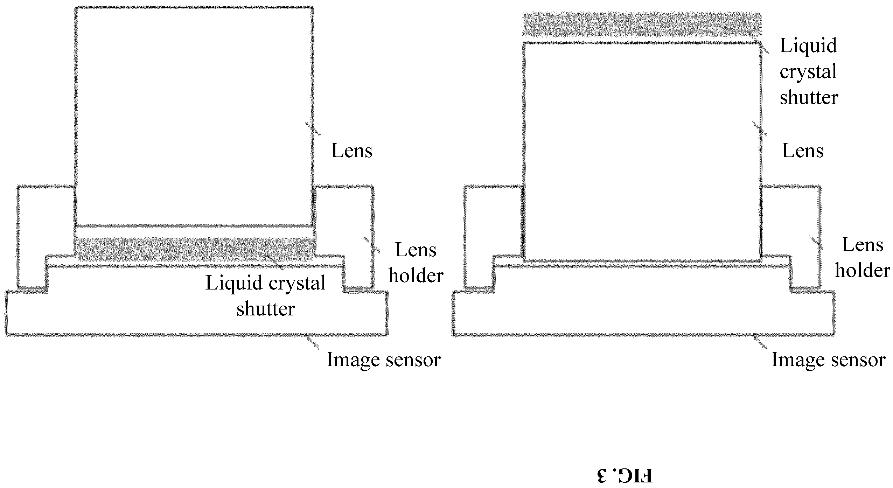

Referring to FIG. 2 and FIG. 3, in a specific implementation of the present disclosure, the globalized rolling shutter system can be applied to both a bright field and the dark field. In the bright field, the sensor module includes a liquid crystal shutter and an image sensor, and the control module includes a liquid crystal controller, a sensor controller, a video input module, a video output module, a processor, and other modules.

In the dark field, the sensor module includes an illumination and an image sensor, and the control module includes a light source controller, a sensor controller, a video input module, a video output module, a processor, and other modules. The image sensor acquires a scene image by setting exposure time to a maximum. As a light source in a scene, the illumination enables the scene to be captured by the image sensor. The light source controller controls the illumination in the sensor module, and can receive image brightness information obtained by the processor to determine time at which the illumination gets on. The sensor controller is configured to control the image sensor. The sensor controller can control the image sensor to acquire an image in the dark field by using the maximum exposure time, an appropriate gain, and other camera parameters. The video input module is configured to receive a digital signal acquired by the image sensor and transmit the digital signal to the processor for subsequent processing. The digital signal not only contains effective pixel information, but also includes row synchronization, field synchronization, and other control signals. The video output module outputs an image processed by the processor to a display. The processor receives the image and the control signal that are acquired by the video input module, analyzes the brightness of the image and time at which the light source gets on, and transmits a result to the light source controller to determine start time at which the light source gets on and duration during which the light source is on, ultimately achieving an automatic exposure function. The other modules are configured to provide power supply, protection, storage, and other functions for the control module. The illumination is the only light source in the dark field, and whether the illumination is enabled can determine whether the image sensor can achieve light sensing for the dark field. The sensor controller can also control the image sensor to acquire the image by using the maximum exposure time and an appropriate parameter.

Optionally, the optical imaging assembly includes a liquid crystal shutter, and an installation position of the liquid crystal shutter includes a liquid crystal panel on a surface of the image sensor and a light shielding panel on a surface of a lens of the image sensor.

In a specific implementation of the present disclosure, the liquid crystal controller receives image brightness and a control timing sequence from the processor to control enabling or disabling of the liquid crystal shutter.

The control module sets the exposure time of the sensor module to the maximum, and within a time interval between a start of exposure in an $n^{th}$-to-last (n>0) row and an end of exposure in a first row, the optical imaging assembly generates a light ray or controls a light ray to enter the image sensor to generate a scene image.

The processor receives the scene image and analyzes a brightness distribution (also referred to as metering) of the scene image, and transmits an analysis result to the light source controller. The light source controller determines new light source on-state duration or external light entry time of the optical imaging assembly based on the analysis result, so as to complete automatic exposure.

Optionally, the exposure control method includes:

analysis is performed and whether a weighted parameter of a grayscale distribution of the acquired scene image exceeds an upper benchmark limit in a specific metering mode is determined; and

when the weighted parameter exceeds the upper benchmark limit, the optical imaging assembly shortens duration of the generated light ray or the controlled light ray entering the image sensor, where specifically, the optical imaging assembly shortens the duration of the generated light ray or the controlled light ray entering the image sensor within the time interval between the start of the exposure in the $n^{th}$-to-last (n>0) row and the end of the exposure in the first row, so as to facilitate acquisition of the scene image by the image sensor.

Optionally, the exposure control method includes:

analysis is performed and whether a weighted parameter of a grayscale distribution of the acquired scene image is lower than a lower benchmark limit in a specific metering mode is determined; and

when the weighted parameter is lower than the lower benchmark limit, the optical imaging assembly increases duration of the generated light ray or the controlled light ray entering the image sensor, where specifically, the optical imaging assembly increases the duration of the generated light ray or the controlled light ray entering the image sensor within the time interval between the start of the exposure in the $n^{th}$-to-last (n>0) row and the end of the exposure in the first row, so as to facilitate acquisition of the scene image by the image sensor.

In a specific implementation of the present disclosure, changing start time of light sensing of an external illumination can solve a problem of a too dark image, but also damages simultaneous exposure performance of a pixel unit. That is, for a pixel row greater than a reference row, light sensing time gradually decreases. In a high-speed imaging scene, information may be missing.

Optionally, the exposure control method further includes:

for an illumination starting from the $n^{th}$-to-last (n>0) row, compensation needs to be performed on a pixel row after the $n^{th}$-to-last (n>0) row, specifically:

$$GV_R = \frac{E_{xcr}}{E_{xlr}} GV$$

In the above formula, GV represents a grayscale value of a to-be-compensated pixel row, $GV_R$ represents a compensated grayscale value, $E_{xlr}$ represents an illumination duration of the to-be-compensated pixel row, and $E_{xcr}$ represents exposure time of a reference row of an external illumination controller.

In a specific implementation of the present disclosure, both the $E_{xlr}$ representing the time at which the illumination of the to-be-compensated row gets on and the $E_{xcr}$ representing the exposure time of the reference row of the external illumination controller can be calculated based on a timing sequence of the image sensor.

In order to address problems that a pixel unit of a globalized shutter sensor has long light sensing time and a low frame rate, and an image sensor has smearing and jello effects, the present disclosure provides a method that combines light sensing of the pixel unit and a sensor timing sequence to adjust automatic exposure. In this way, the image sensor and the pixel unit can be simultaneously exposed to achieve a same function as a globalized shutter. On a basis of reducing occurrence of the smearing and jello effects in imaging of a motion scene, a frame acquisition rate is ensured, dynamic imaging quality is improved, and a hardware cost is reduced. In addition, in methods for achieving the automatic exposure, controlling a sensitivity ratio of the image sensor is more real-time than setting a parameter of an image chip. The controlling the sensitivity ratio of the image sensor can effectively meet requirements of imaging in special dynamic scenes such as medical treatment, biological research, high-speed motion photography, and autonomous driving.

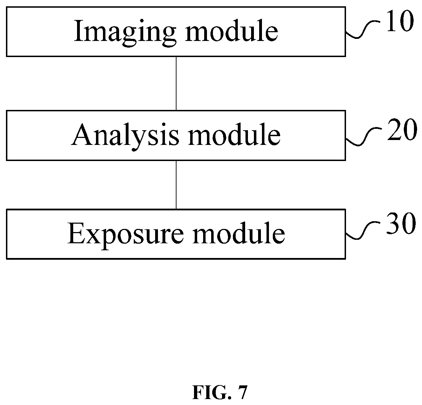

FIG. 7 is a schematic structural diagram showing an exposure control apparatus for a globalized rolling shutter according to an embodiment of the present disclosure. The exposure control apparatus may include:

a globalized rolling shutter system including a sensor module and a control module connected to each other, where
the sensor module includes an optical imaging assembly and an image sensor, and the control module includes a processor and a light source controller;
an imaging module 10 configured to set exposure time of the sensor module to a maximum through the control module, where within a time interval between a start of exposure in an $n^{th}$-to-last (n>0) row and an end of exposure in a first row, the optical imaging assembly generates a light ray or controls a light ray to enter the image sensor, so as to facilitate acquisition of a scene image by the image sensor;
an analysis module 20 configured to receive the scene image and analyze a brightness distribution (also referred to as metering) of the scene image through the processor, and transmit an analysis result to the light source controller; and
an exposure module 30 configured to determine new light source on-state duration or external light entry time of the optical imaging assembly through the light source controller based on the analysis result, so as to complete automatic exposure.

Optionally, the exposure control apparatus includes:

a first analysis and determining module configured to perform analysis and determine whether a weighted parameter of a grayscale distribution of the acquired scene image exceeds an upper benchmark limit in a specific metering mode; and
a first adjustment module configured to shorten, through the optical imaging assembly, duration of the light ray entering the image sensor when the weighted parameter exceeds the upper benchmark limit, where specifically, the optical imaging assembly shortens the duration of the generated light ray or the controlled light ray entering the image sensor within the time interval between the start of the exposure in the $n^{th}$-to-last (n>0) row and the end of the exposure in the first row, so as to facilitate the acquisition of the scene image by the image sensor.

Optionally, the exposure control apparatus includes:

a second analysis and determining module configured to perform analysis and determine whether a weighted parameter of a grayscale distribution of the acquired scene image is lower than a lower benchmark limit in a specific metering mode; and

a second adjustment module configured to increase, through the optical imaging assembly, duration of the light ray entering the image sensor when the weighted parameter is lower than the lower benchmark limit, where specifically, the optical imaging assembly increases the duration of the generated light ray or the controlled light ray entering the image sensor within the time interval between the start of the exposure in the $n^{th}$-to-last (n>0) row and the end of the exposure in the first row, so as to facilitate the acquisition of the scene image by the image sensor.

Optionally, for an illumination starting from the $n^{th}$-to-last (n>0) row, compensation needs to be performed on a pixel row after the $n^{th}$-to-last (n>0) row, specifically:

$$GV_R = \frac{E_{xcr}}{E_{xlr}} GV$$

In the above formula, GV represents a grayscale value of a to-be-compensated pixel row, $GV_R$ represents a compensated grayscale value, $E_{xlr}$ represents illumination duration of the to-be-compensated pixel row, and $E_{xcr}$ represents exposure time of a reference row of an external illumination controller.

Optionally, the optical imaging assembly includes a liquid crystal shutter, and an installation position of the liquid crystal shutter includes a liquid crystal panel on a surface of the image sensor and a light shielding panel on a surface of a lens of the image sensor.

Functions of the exposure control apparatus in this embodiment of the present disclosure have been described in the above method embodiments. Therefore, for any details not covered in the description of this embodiment, reference may be made to the relevant description in the above embodiments, and details are not described herein again.

Based on a same inventive concept, the embodiments of the present disclosure further provide an electronic device.

The following describes an embodiment of the electronic device in the present disclosure. The electronic device can be regarded as an implementation of a specific entity of the above method and apparatus embodiments of the present disclosure. Details described in the embodiment of the electronic device in the present disclosure should be considered as a supplement to the above method or apparatus embodiments. For details not disclosed in the embodiment of the electronic device in the present disclosure, reference may be made to the above method or device embodiments for implementation.

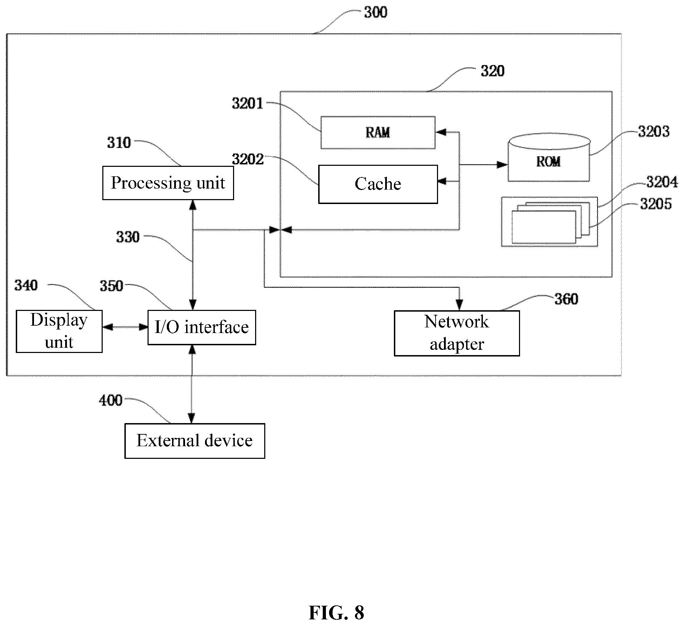

FIG. 8 is a schematic structural diagram of an electronic device according to an embodiment of the present disclosure. An electronic device 300 according to this embodiment of the present disclosure is described below with reference to FIG. 8. The electronic device 300 shown in FIG. 8 is only an example, which should not be construed as any limitation on a function and an application scope of the embodiments of the present disclosure.

As shown in FIG. 8, the electronic device 300 is represented in a form of a general-purpose computing device. Components of the electronic device 300 may include, but are not limited to, at least one processing unit 310, at least one storage unit 320, a bus 330 connecting different system components (including the memory cell 320 and the processing unit 310), and a display unit 340.

The storage unit stores program code. The program code may be executed by the processing unit 310 to enable the processing unit 310 to perform the steps according to the exemplary implementations of the present disclosure in the above exposure control method of the present disclosure. For example, the processing unit 310 may perform the steps described above.

The storage unit 320 may include a readable medium in a form of a volatile storage unit, for example, a random access memory (RAM) 3201 and/or a cache 3202, and may further include a read-only memory (ROM) 3203.

The storage unit 320 may alternatively include a program/utility 3204 including a set of (at least one) program modules 3205. The program module 3205 includes, but is not limited to: an operating system, at least one application, other program modules, and program data. Each of these examples or a combination thereof may include an implementation of a network environment.

The bus 330 may represent at least one of several types of bus structures, including a storage unit bus or a storage unit controller, a peripheral bus, a graphics acceleration port, a processing unit, or a local area bus using any of a plurality of bus structures.

The electronic device 300 may also communicate with at least one external device 400 (for example, a keyboard, a pointing device, and a Bluetooth device), and may also communicate with at least one device that enables a viewer to interact with the electronic device 300, and/or with any device that enables the electronic device 300 to communicate with at least one other computing device (for example, a router and a modem). Such communication may be performed through an input/output (I/O) interface 350. The electronic device 300 may further communicate with at least one network (for example, a local area network (LAN), a wide area network (WAN), and/or a public network such as the Internet) through a network adapter 360. The network adapter 360 may communicate with other modules of the electronic device 300 through the bus 330. It should be understood that although not shown in FIG. 8, other hardware and/or software modules may be used in combination with the electronic device 300, including but not limited to:

microcode, a device driver, a redundant processing unit, an external disk drive array, a redundant array of independent disks (RAID) system, a tape driver, a data backup storage system, and the like.

Through the above description of the embodiments, persons skilled in the art may easily understand that the embodiments described in the present disclosure may be implemented by software, or may be implemented by software in combination with necessary hardware, or may be implemented only through hardware circuit logic. Therefore, the technical solutions according to the implementations of the present disclosure may be implemented in a form of a software product. The software product may be stored in a computer-readable storage medium (which may be a compact disk read-only memory (CD-ROM), a universal serial bus (USB) flash drive, a removable hard disk, or the like), and includes a plurality of instructions to enable a computing device (which may be a personal computer, a server, a network device, or the like) to perform the exposure control method in the present disclosure. When a computer program is executed by a data processing device, the computer-readable storage medium is enabled to implement the above exposure control method in the present disclosure. Alternatively, a circuit logic function of the image processing architecture described in the present disclosure is implemented in a field-programmable gate array (FPGA) and a complex programmable logic device (CPLD) through configuration. Furthermore, the above exposure control method in the present disclosure is implemented by invoking this function by on-board software of a system. Alternatively, the above exposure control method in the present disclosure can be implemented only through logic circuits configured on the FPGA and the CPLD.

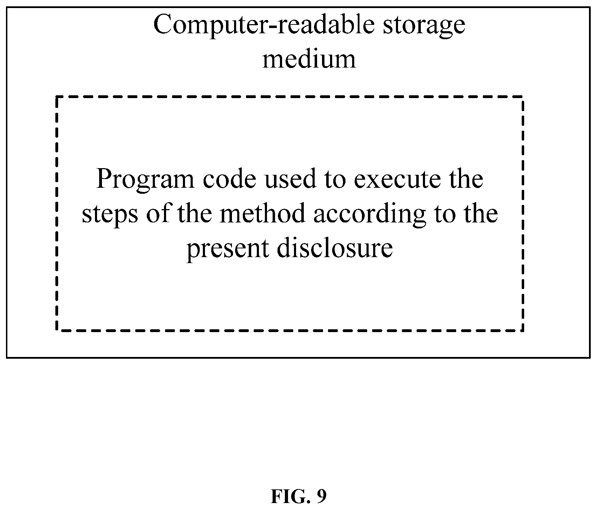

FIG. 9 is a schematic diagram of a computer-readable storage medium according to an embodiment of the present disclosure.

A computer program for implementing the method described above may be stored in at least one computer-readable storage medium. The computer-readable storage medium may be a readable signal medium or a readable storage medium. For example, the readable storage medium may be, but not limited to, an electrical, magnetic, optical, electromagnetic, infrared, or semiconductor system, apparatus, or device, or any combination thereof. More specific examples (non-exhaustive) of the readable storage medium may include: an electrical connection with at least one conducting wire, a portable disk, a hard disk, a RAM, a ROM, an erasable programmable ROM (an EPROM or a flash memory), an optical fiber, a CD-ROM, an optical storage device, a magnetic storage device, or any suitable combination thereof.

The computer-readable storage medium may include a data signal propagated in a baseband or as a part of a carrier, and readable program code is carried therein. The propagated data signal may be in various forms, including but not limited to an electromagnetic signal, an optical signal, or any suitable combination thereof. The readable storage medium may alternatively be any readable medium other than the readable storage medium. The readable medium may send, propagate, or transmit a program to be used by or in combination with an instruction execution system, apparatus, or device. Program code contained on the readable storage medium may be transmitted using any suitable medium, including but not limited to: a wireless medium, a wired medium, an optical cable, a radio frequency (RF), or any suitable combination thereof.

The computer-readable storage medium may include circuit configuration logic in programmable logic circuits such as an FPGA and a CPLD. The image processing architecture described in the present disclosure and implemented by other application-specific hardware circuit logic should also be considered as part of the computer-readable storage medium.

Program code for executing the operations in the present disclosure may be compiled by using at least one programming language or any combination thereof. The programming language includes object oriented programming languages such as Java and C++, and further includes a conventional procedural programming language such as a "C" language or a similar programming language; and may also be verilog and a very high speed integrated circuit hardware description language (VHDL) for logic circuit configuration. The program code can be executed fully on a computing device of a viewer, executed partially on a device of a viewer, executed as an independent software package, executed partially on a computing device of a viewer and partially on a remote computing device, executed fully on a remote computing device or a server, or executed by configuring a logic circuit. In a circumstance in which the remote computing device is involved, the remote computing device may be connected to the computing device of the viewer via any type of network, including a LAN or a WAN, or may be connected to an external computing device (for example, via the Internet by using an Internet service provider).

In summary, the present disclosure may be implemented in hardware, a software module running on at least one processor, or a combination thereof. Those skilled in the art should understand that in practice, a general-purpose data processing device such as a microprocessor or a digital signal processor (DSP) can be used to implement some or all functions of some or all of the components in the embodiments of the present disclosure. The present disclosure can also be implemented as a device or apparatus program (for example, a computer program or a computer program product) for performing part or all of the exposure control method described herein. Such a program implementing the present disclosure may be stored on a computer-readable storage medium or may be in a form of at least one signal. Such a signal may be downloaded from an Internet website, provided on a carrier signal, or provided in any other form.

In the above specific embodiments, the objectives, the technical solutions, and the beneficial effects of the present disclosure are further described in detail. It should be understood that the present disclosure is not inherently related to any specific computer, virtual device, or electronic device, and various general-purpose apparatuses can also implement the present disclosure. The above descriptions are merely specific embodiments of the present disclosure, and are not intended to limit the present disclosure.

The embodiments in the present disclosure are described in a progressive manner. For same or similar parts between embodiments, reference may be made to each other. Each embodiment focuses on a difference from other embodiments.

The above descriptions are merely the embodiments of the present disclosure, and are not intended to limit the present disclosure. Various changes and modifications can be made to the present disclosure by those skilled in the art.

**Claims**

1. An exposure control method for a globalized rolling shutter, wherein a globalized rolling shutter system comprises a sensor module and a control module connected to each other, wherein

   the sensor module comprises an optical imaging assembly and an image sensor, and the control module comprises a processor and a light source controller;
   the exposure control method comprises:

   the control module setting exposure time of the sensor module to a maximum, and within a time interval between a start of exposure in an $n^{th}$-to-last ($n>0$) row and an end of exposure in a first row, the optical imaging assembly generating a light ray or controlling a light ray to enter the image sensor to generate a scene image;
   the processor receiving the scene image and analyzing a brightness distribution of the scene image, and transmitting an analysis result to the light source controller; and
   the light source controller determines a new on-state duration or external light entry time of the optical imaging assembly based on the analysis result, so as to complete automatic exposure.

2. The exposure control method according to claim 1, further comprising:

   performing analysis and determining whether a weighted parameter of a grayscale distribution of the scene image exceeds an upper benchmark limit in a specific metering mode; and
   when the weighted parameter exceeds the upper benchmark limit, shortening, by the optical imaging assembly, duration of the generated light ray or the controlled light ray entering the image sensor, wherein specifically, the optical imaging assembly shortens the duration of the generated light ray or the controlled light ray entering the image sensor within the time interval between the start of the exposure in the $n^{th}$-to-last ($n>0$) row and the end of the exposure in the first row, so as to facilitate acquisition of the scene image by the image sensor.

3. The exposure control method according to claim 1, further comprising:

   performing analysis and determining whether a weighted parameter of a grayscale distribution of the scene image is lower than a lower benchmark limit in a specific metering mode; and
   when the weighted parameter is lower than the lower benchmark limit, increasing, by the optical imaging assembly, duration of the generated light ray or the controlled light ray entering the image sensor, wherein specifically, the optical imaging assembly increases the duration of generated the light ray or the controlled light ray entering the image sensor within the time interval between the start of the exposure in the $n^{th}$-to-last ($n>0$) row and the end of the exposure in the first row, so as to facilitate acquisition of the scene image by the image sensor.

4. The exposure control method according to claim 3, further comprising:
   for an illumination starting from the $n^{th}$-to-last ($n>0$) row, performing compensation on a pixel row after the $n^{th}$-to-last ($n>0$) row, specifically:

   $$GV_R = \frac{E_{xcr}}{E_{xlr}} GV$$

   wherein GV represents a grayscale value of a to-be-compensated pixel row, $GV_R$ represents a compensated grayscale value, $E_{xlr}$ represents illumination duration of the to-be-compensated pixel row, and $E_{xcr}$ represents exposure time of a reference row of an external illumination controller.

5. The exposure control method according to claim 4, wherein the optical imaging assembly comprises a liquid crystal shutter, and an installation position of the liquid crystal shutter comprises a liquid crystal panel on a surface of the image sensor and a light shielding panel on a surface of a lens of the image sensor.

6. An exposure control apparatus for a globalized rolling shutter, comprising a globalized rolling shutter system, wherein the globalized rolling shutter system comprises a sensor module and a control module connected to each other, wherein

the sensor module comprises an optical imaging assembly and an image sensor, and the control module comprises a processor and a light source controller;
the exposure control apparatus further comprises:

an imaging module configured to set exposure time of the sensor module to a maximum through the control module, wherein within a time interval between a start of exposure in an $n^{th}$-to-last (n>0) row and an end of exposure in a first row, the optical imaging assembly generates a light ray or controls a light ray to enter the image sensor, so as to facilitate acquisition of a scene image by the image sensor;
an analysis module configured to receive the scene image and analyze a brightness distribution of the scene image through the processor, and transmit an analysis result to the light source controller; and
an exposure module configured to determine a new light source on-state duration or external light entry time of the optical imaging assembly through the light source controller based on the analysis result, so as to complete automatic exposure.

7. The exposure control apparatus according to claim 6, further comprising:

a first analysis and determining module configured to perform analysis and determine whether a weighted parameter of a grayscale distribution of the scene image exceeds an upper benchmark limit in a specific metering mode; and
a first adjustment module configured to shorten duration of the light ray to enter the image sensor through the optical imaging assembly when the weighted parameter exceeds the upper benchmark limit, wherein specifically, the optical imaging assembly shortens the duration of the generated light ray or the controlled light ray entering the image sensor within the time interval between the start of the exposure in the $n^{th}$-to-last (n>0) row and the end of the exposure in the first row, so as to facilitate the acquisition of the scene image by the image sensor.

8. The exposure control apparatus according to claim 6, further comprising:

a second analysis and determining module configured to perform analysis and determine whether a weighted parameter of a grayscale distribution of the acquired scene image is lower than a lower benchmark limit in a specific metering mode; and
a second adjustment module configured to increase duration of the light ray to enter the image sensor through the optical imaging assembly when the weighted parameter is lower than the lower benchmark limit, wherein specifically, the optical imaging assembly increases the duration of the generated light ray or the controlled light ray entering the image sensor within the time interval between the start of the exposure in the $n^{th}$-to-last (n>0) row and the end of the exposure in the first row, so as to facilitate the acquisition of the scene image by the image sensor.

9. An electronic device, comprising:

a processor; and a memory configured to store an instruction executable by the processor, wherein the instruction is executed by the processor to perform the exposure control method according to any one of claims 1 to 5; and
a programmable logic device; and a memory configured to store a loaded file of the programmable logic device, wherein the loaded file is loaded into the programmable logic device to perform the exposure control method according to any one of claims 1 to 5.

10. A computer-readable storage medium, wherein the computer-readable storage medium stores at least one program, and the at least one program is executed by a processor to implement the exposure control method according to any one of claims 1 to 5.

**FIG. 1**

| Sensor module | | Control module | | | |
|---|---|---|---|---|---|
| Liquid crystal shutter | ← | Liquid crystal controller | ← | Video output | → Display |
| Image sensor | ← | Sensor controller | → | Processor | |
| | → | Video input | | Other modules | |

**FIG. 2**

Lens

Liquid crystal
shutter

Lens

Lens
holder

Liquid crystal
shutter

Lens
holder

Image sensor

Image sensor

FIG. 3

EP 4 633 184 A1

**FIG. 4**

FIG. 5

**FIG. 6**

| Imaging module | 10 |
| Analysis module | 20 |
| Exposure module | 30 |

**FIG. 7**

FIG. 8

Computer-readable storage
medium

Program code used to execute the
steps of the method according to the
present disclosure

FIG. 9

## INTERNATIONAL SEARCH REPORT

| International application No. |
| --- |
| **PCT/CN2023/077878** |

| A. | CLASSIFICATION OF SUBJECT MATTER |
| --- | --- |

H04N23/73(2023.01)i

According to International Patent Classification (IPC) or to both national classification and IPC

| B. | FIELDS SEARCHED |
| --- | --- |

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNTXT, ENTXTC, VEN, CNKI: 卷帘快门, 全局快门, 行, 自动曝光, 图像, 亮度, 光源, 灰度, 加权, 权重; rolling shutter, global shutter, row, automatic exposure, image, brightness, light source, gray, weight

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2018191935 A1 (EOSMEM CORP.) 05 July 2018 (2018-07-05) description, paragraphs [0031]-[0053], and figures 1-4 | 1, 6, 9, 10 |
| Y | US 2018191935 A1 (EOSMEM CORP.) 05 July 2018 (2018-07-05) description, paragraphs [0031]-[0053], and figures 1-4 | 2-5, 7, 8 |
| Y | CN 112839180 A (HEFEI MEYER OPTOELECTRONIC TECHNOLOGY INC.) 25 May 2021 (2021-05-25) description, paragraphs [0002]-[0086] | 2-5, 7, 8 |
| A | CN 114793271 A (HUAWEI TECHNOLOGIES CO., LTD.) 26 July 2022 (2022-07-26) entire document | 1-10 |
| A | CN 113438424 A (HANGZHOU HIKVISION DIGITAL TECHNOLOGY CO., LTD.) 24 September 2021 (2021-09-24) entire document | 1-10 |
| A | CN 101783888 A (XI'AN INSTITUTE OF OPTICS AND PRECISION MECHANICS, CHINESE ACADEMY OF SCIENCES) 21 July 2010 (2010-07-21) entire document | 1-10 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **31 March 2023** | **03 April 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | Publication date (day/month/year) |
|---|---|---|---|---|---|
| US | 2018191935 | A1 | 05 July 2018 | None | |
| CN | 112839180 | A | 25 May 2021 | None | |
| CN | 114793271 | A | 26 July 2022 | None | |
| CN | 113438424 | A | 24 September 2021 | None | |
| CN | 101783888 | A | 21 July 2010 | None | |

Form PCT/ISA/210 (patent family annex) (July 2022)